# EUROPEAN PATENT APPLICATION

(11) **EP 4 582 405 A1**
(43) Date of publication of application: **09.07.2025**
(21) Application number: 24150354.9
(22) Date of filing: 04.01.2024
(51) Int. Cl.: C05F 1/00, C05F 5/00, C05F 11/02

(54) **ORGANIC FERTILIZER AND SOIL AMENDMENT COMPRISING EGGSHELL POWDER, EGGSHELL BIOCHAR, MOSAMBI PEEL POWDER, AND BANANA PEEL POWDER**

(71) Applicant: Moeniralam, Soraya, 3033 HG Rotterdam (NL)
(72) Inventor: Moeniralam, Soraya, 3033 HG Rotterdam (NL)
(74) Representative: Patentwerk B.V.

(57) **Abstract**

This unique organic *Fertilizer and Soil Enhancer* relates to turning (household) waste material into plant food to transforms industrial agriculture soil into healthy pH neutral land at the same time detoxify agricultural soil from heavy metals and thereafter feeding the ground with necessary nutrients N+P+K+ Ca+ C+ necessary minerals. This fertilizer and soil enhancer contains eggshells, banana peels, mosambi and biochar from eggshells in a certain ratio to serve every type of soil. The composition of the formula is one of a kind not known yet to those skilled in the art.

## Description

### FIELD OF THE INVENTION

This invention relates to the field of organic fertilizers, (plant food) to supplement different soils with varying amounts of nutrients necessary for plant growth.

### BACKGROUND OF THE INVENTION

The growth of plants is determined by a variety of environmental factors including temperature, available water, available light, and available nutrients in the soil. The nutrients necessary for plant growth include: THE PRIMARY MACRONUTRIENTS nitrogen (N), phosphorus (P), potassium (K); THE SECONDARY MACRONUTRIENTS calcium (Ca), sulfur (S), magnesium (Mg); and the MICRONUTRIENTS boron (B), chlorine (CI), manganese (Mn), iron (FE, zinc (ZN), copper (Cu), molybdenum (Mo), selenium (Se).

In the pursuit of sustainable agricultural practices, the invention of a novel and unique fertilizer has emerged, a revolutionizing approach to soil enrichment with a formula based on nutrients from organic produce with nitrogen, hydrogen, carbon and calcium. Our cutting-edge invention integrates eggshell biochar, eggshell powder, banana peel powder, and mosambi peel powder, presenting an innovative solution for improving **pH neutral** soil as well in industry as gardening promoting sustainable crop growth by suppling any type of soil with the nutrients it needs at that time.

Traditional fertilizers often rely on synthetic compounds that NPK - while effective in certain aspects - may contribute to environmental degradation and lack the comprehensive benefits provided by organic alternatives. Recognizing the need for a more sustainable and holistic approach, the invention draws inspiration from nature's abundance, mainly household waste to create a synergistic blend that enhances soil fertility and structure.

At the heart of this invention is the incorporation of eggshell biochar and a certain citrus fruit peel called mosambi with emphasis on nitrogen, hydrogen, carbon and calcium. Eggshell biochar, a relative new phenomenon is a carbon-rich material produced through the controlled pyrolysis of eggshells. This biochar not only sequesters carbon effectively but also boasts a porous structure that enhances water retention, nutrient availability, and overall soil aeration. And most importantly it neutralizes (industrial)soil from heavy metals like cadmium and lead (1,2). The novel addition of eggshell biochar in combination with mosambi peel powder sets this fertilizer apart, introducing a sustainable element to soil enhancement practices. Mosambi peel powder is very high in natural citric acid which has high adds natural antimicrobial properties, enriches the soil with organic content and complements the benefits of biochar eggshell in a magnificent way as soil enhancer.

Also, divers nutrient contributions such as eggshell powder and banana peel powder, are added because collectively they bring a diverse array of nutrients to the formulation. Eggshell powder, rich in calcium and minerals, promotes plant growth and contributes to soil structure. Banana peel powder introduces organic matter, hydrogen, potassium, and other essential nutrients. The unique combination ensures a comprehensive nutrient profile, addressing various aspects of soil health.

A key driving force behind the invention is its commitment to environmental sustainability. By repurposing agricultural waste, such as eggshells, banana peels, and mosambi peels, the formulation aligns with principles of a circular economy, reducing waste and contributing to a more sustainable agricultural ecosystem. This novel fertilizer acts as both a soil enhancer and a nutrient source, fostering a balanced and thriving environment for plant growth. The integrated components work synergistically to improve soil structure, enhance water retention, and activate microbial life, creating an optimal foundation for sustainable agriculture.

In conclusion, the invention of this unique fertilizer with eggshell biochar, eggshell powder, banana peel powder, and mosambi peel powder marks a significant leap forward in sustainable agricultural practices. By combining innovation with organic principles, this formulation aims to contribute to the resilience and health of our soils, promoting a more sustainable and regenerative approach to industrial agriculture as well as gardening.

### ELEMENTS OF THIS UNIQUE INVENTION.

The fertilizer consists of 4 main low-cost waste ingredients:
*1. Eggshell Biochar (ESB):* ESB is a carbon-rich material produced by heating organic eggshells in the absence of oxygen. ESB regards as a kind of biochar prepared by a simple one-pot pyrolysis method (a). The pyrolysis method can be defined as the process of heating a certain substance in the absence of oxygen. Pyrolysis involves the chemical transformation (decomposition) of a sample on heating to high temperature 400-1000 degrees Celsius. In case the eggshells are gathered and cleansed from residues in Luke warm water. Then kept in sunlight for 72 hours, 14 days with 5 peak sunshine hours to dry. After that they undergo the one-pot pyrolysis method to become biochar.
   *Analyses of eggshell biochar*: ESB can serve as a valuable *soil amendment* and support nutrient cycling in the soil. When infused or enriched with nutrients, ESB can become a *carrier for beneficial elements.* ESB also contributes to soil *PH regulation.* ESB components provide a porous structure that can *enhance soil structure* and *water retention.* The particular calcium content in eggshell biochar makes it particularly useful for soils that may benefit from increased calcium levels or those that require pH adjustment. ESB is also regarded as a *carbon sequestration.* This means it is known for storing carbon in the soil for an extended period (*an advantage to fight the climate crisis).* Therefore, Eggshell Biochar shows us to be an effective and *innovative catalyst* for organic pollutant degradation, meaning a process by which pollutants or contaminants in the environment are broken down, transformed or reduced to less harmful forms.
*2.Eggshell Powder (ESP):* ESP is a fine powder made from crushed and ground eggshells which is rich in calcium carbonate. In case eggshells are collected from household wastage. To remove bacterial and viral contact, eggshell are washed in Luke warm water. After that eggshells are treated for 5 minutes with boiling water. Then they are kept in sunlight around 72 hours approximately 14 days of 5 peak sunshine hours.
   *Analysis of eggshell powder* shows us that ESP is a *rich calcium (Ca) source*, because eggshells are primarily composed of calcium carbonate, making ESP an excellent and natural source of calcium for plants. Calcium is crucial for strong cell walls and overall plant health. Also, the calcium carbonate in ESP acts as a *pH buffer*, helping to neutralize acidic soils and create a more balanced pH environment for plants. In addition to calcium, ESP is a *nutrient boost* because it contains trace amounts of other minerals like magnesium, phosphorous, proteins and amino acids, contributing to a well-rounded nutrient profile for plants. Furthermore, ESP is a *slow- release fertilizer.* It releases nutrients gradually, providing a slow and steady nutrient supply to plants over time. The plant gets nutrients when needed. ESP is also known to *improve soil structure.* When incorporated into soil, ESP can enhance soil structure, promoting better aeration and water retention. Utilizing ESP is a costs-effective and sustainable way to improve soil fertility and support healthy plant grow.
*3.Mosambi Peel Powder MPP*: MPP is made from the peels of mosambi or so called citrus limetta or so called bitter orange. MPP is a fine powder made from dried, crushed and ground mosambi peels which are very rich in nitrogen, citric acid and phosphorous. In case mosambi peels are collected from household wastage. To remove bacterial and viral contact, mosambi peels are washed in Luke warm water. After that they are kept in sunlight around 72 hours approximately 14 days of 5 peak sunshine hours.
   *Analysis of mosambi peel powder* shows us that it contains various rich elements for plant food and soil health. MPP contains high amounts of *citric acid* which provide acidity and acts as a chelating agent. By changing the ratio of citric acid the pH value of soils can be balanced. MPP contains *polyphenols* and *flavonoids* like hesperidin and naringin which are plant compounds with antioxidant properties. Also, MPP contains *organic fibers* which contributes to the organic matter content in soil. Furthermore, MPP contains high doses of *vitamin C* which contributes also as antioxidant. MPP contains a certain amount of *phosphorus* an essential nutrient for biological functions in DNA synthesis of plants. It supports flowering, root development and energy transfers. MPP is also high *essential oils* like limonene and linalool. These essential oils of MPP have been explored for their potential as *natural pesticides* that may deter certain pests. Utilizing MPP is also costs-effective and sustainable to improve soil fertility and support healthy plant grow.
*4.Banana peel powder (BPP):* BPP is a fine powder made from dried, crushed and ground banana peels which are very rich in potassium, phosphorous, calcium, magnesium and some natural compounds. In case banana peels are collected from household wastage. To remove bacterial and viral contact, banana peels are washed in Luke warm water. After that they are kept in sunlight around 72 hours approximately 14 days of 5 peak sunshine hours.
   *Analysis of banana peel powder* shows us that it contains various elements that benefit plant growth and soil health. There is an abundant quantity of potassium (K) in banana peels. BPP contains also a high amount of *phosphorous (P)* . Also, a certain amount of *calcium (Ca)* is present in BPP. Furthermore, BPP contributes an essential element *magnesium* (Mg), *soluble and insoluble fiber*, which can benefit soil structure, water retention, and microbial activity. Also, BPP contains anti-oxidants like *phenolics* and *flavonoids.*

### NEED FOR THIS INVENTION

The repeated use of farmland impoverishes the soil. Also, the use of chemical fertilizers not only harm the environment but excessive use can lead to nutrient run-off, contaminating water, aquatic ecosystems, they degrade soil structure and reduce microbial activity, impacting the overall health and fertility of the soil. Additionally, the energy-intensive manufacturing process of chemical fertilizers contributes to carbon emissions, adding to environmental concerns.

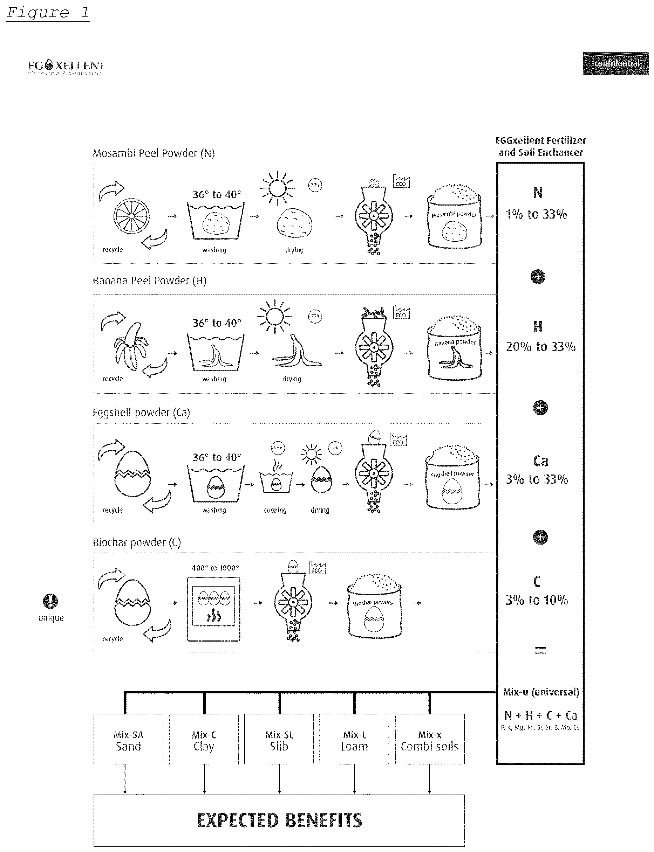

That is why adding organic manure is essential for the growth of plants. The right mix is needed because each soil needs other nutrients. One of the most important values of soil is its pH because the pH of the soil directly affects its availability and toxicity. In general, the pH value of soil is between 6.0-7.5. If the soil does not meet this value, the soil can be deoxygenated. Because of the fact that chemical fertilizers contaminate the soil and thus reduce the immunity of the soil lowers and particularly creates an imbalance in soil pH, there has been a need to develop this specific fertilizer and soil enhancer. It is named *EGGxellent Fertilizer and Soil Enhancer.* (figure 1)

### ARE THERE SIMILAR INVENTIONS LIKE THIS

There are known inventions that capitalize on feeding the soils organically with fruit peels, waste food scraps and residual wool. These inventions do not offer a formula like the invented formula, they offer a universal mix with also none organic components. The inventions known work with a mix of all fruit peels or organic waste and chemical additives. Not all fruit waste or organic waste/compost is good for all types of soil. In mis-composting, the decay process takes place without oxygen (anaerobic), creating methane or nitrous oxide. Both are harmful greenhouse gases.

Our invention focuses on the nutrients for plant growth and soil health that does not have nitrates nor creation of methane or nitrous oxide.

### SCIENTIFIC BACKGROUND FOR THE INVENTION

Studies have shown that it is mainly the soil's pH value that needs to be addressed to grow healthy crops. There is a need for sustainable and balanced fertilizers to mitigate these disadvantages. The biochemical process (photosynthesis) and biological process (organic carbon production) in the soil are disturbed if the pH value of the soil is not healthy. To this end, studies have been done on retention and determination values of **nitrogen (N), hydrogen (H)** and **carbon (C).**

**Nitrogen** has a prominent role in the process of photosynthesis. Photosynthesis is the biochemical process by which green plants use sunlight as a source of energy to convert carbon dioxide and water. Nitrogen also plays an important role in enhancing the growth process and improving nutritional quality. **Hydrogen** is important for the development of the plant and the formation of organic carbon, as well as providing nutrients for the plant to grow. It also stimulates the structure, biological and physical health of the soil. The released organic carbon releases nutrients to help the plant grow healthily. This is why **carbon** is one of the main building blocks of a plant. All this happens optimally only when the soil has a healthy pH value. Therefore, to find the right *unique organic nutrient mix, nitrogen, carbon and hydrogen* content must be taken into account. These biochemical and metabolic processes are highly dependent on the **calcium** content of the soil. The idea has arisen to synthesize a nutrient mix containing nitrogen, carbon, hydrogen and calcium to optimally feed each type of soil.

The dependency relationship between these four elements has been scientifically investigated by Khairnar & Nair et al.240 (1). Khairnar & Nair et al. (3) of the Department of Mechanical Engineering, University of Mumbai contend that by combining a certain unique composition of a number of specific organic waste products, the likelihood of a high quality organic nutrient can be assembled that can optimally nourish any type of soil. They begin by arguing that soil fertility and nutrient uptake can only be ensured with proper soil pH value. If the pH value of the soil is in imbalance you can bring it back to a healthy pH value through organic nutrition. To accomplish this, it is important to first determine the pH value of the organic additives. Together with the retention time and the determination of the nutrients in grams, they provide insight into how long and at what dosage the intended effect can occur. Based on all the above knowledge, EGGxellent Swiss SARL has developed a new formula which can be used as organic fertilizer and soil enhancer. This formula restores the pH value, releases necessary nutrition and cleanse the soil from heavy metals.

In the relevant research by Khairnar & Nair et al (3). the Glass electrode pH digital meter is used to determine the pH value of the individual components of the mix. This pH value is determined at 1 gram/100ml for: a) eggshell powder, b) banana peel powder and c) mosambi peel powder. This shows that eggshell powder has a ratio of 6.8; mosambi peel powder has a ratio of 6.4 and banana peel powder has a ratio of 8.1.

Next, using the CHNS Analyser on eggshell powder, banana peel powder and mosambi powder by the Dumas method, an analysis is done on nitrogen, carbon and hydrogen, measured in Retention Time/ Per Minute. Retention time per minute
indicates how long a given value of a given quantity remains in the column. The values are respectively for: eggshell powder (N) 0.8 RT/min, (C)1,192 RT/min, (H)3,308 RT/min; For mosambi peel powder (N)0.792 RT/min, (C)1,117 RT/min, (H)2,975 RT/min and for banana peel (N) 0.8;(C) 1,133; (H)3,308. From this retention time analysis results the determination of concentrations of the three powders. These look as follows for nutrients N, C and H: in 2,819 mg of eggshell powder **(ESP)** there is about 0.39%(N), **12.6% (C),** 0.26% (H); In 2,114 mg of mosambi peel powder **(MPP)** there is about **1.1% (N),** 38% (C), and 5.5% (H); In 2,256 mg of banana peel powder **(BPP)** there is about 0.79% (N), 36. 2% (C)and **6.2%285 (H)** (6).

The results of this study and the aforementioned scientific studies together prove, that nitrogenous carbon is more present in mosambi powder and that banana peels contain more hydrogen (6). Furthermore, it appears (11) that eggshell powder contains less acid and more calcium. The high calcium content allows biochemical functions and metabolic processes to be regulated. A single eggshell contains between 2.07-0.18 g of Calcium. Calcium plays a crucial role in the growth and development of a295 plant. Calcium also plays an important role in the formation of a plant's decel membranes (5). Furthermore, calcium lowers the acidity of the soil which means an immediate increase in crop production (12). Nitrogen combined with carbon, hydrogen, oxygen and sulfur is able to develop amino acids. These amino acids are the building blocks for proteins. Then, it appears that banana peels are alkaline and that mosambi peels naturally contain a good acid, which is excellently absorbed into the soil. With this valid and reliable result, it is scientifically proven by Khairnar and Nair et al (2). beyond doubt that a combination of eggshells, banana peels and mosambi peels provide an efficient formula for feeding the soil as needed.

In conclusion each type of soil can therefore be served by adjusting the weight of a particular component. We add in our formula an extra dose of carbon by adding eggshell biochar since that is very effective for the main building blocks in plants. This unique composition of the organic mix waste, we believe, will become the source for improving agricultural soils.

### OUR UNIQUE INVENTION ORGANIC FERTILIZER EXPLAINED IN DETAIL

Our invention focuses on enriching the soil to achieve a neutral pH in order for industrial farmland to become healthy. At the same time, this invention frees the soil of heavy metals such as cadmium, lead and zinc in order not to end up in crops. Simultaneously the product focuses on healthy nutritious plant growth. It infuses the soil with necessary nutrients.

Organic fertilizers can be produced utilizing a variety of ingredients to obtain a variety of *primary nutrients.* In this desired invention our formulation can vary depending on the intended use of the fertilizer. The present application is directed to a fertilizer that is **organic** and contains all compounds essential for plant growth, including the three primary macronutrients N,P,K some micronutrients Ca, Mn, Cu,Zn and a specific addition of carbon(C)in the form of eggshell biochar.

How do these elements come together in our invention? An aspect of the invention is the embodiment of the product. The ratios for this invention are 1%-33% mosambi peel powder (MPP) which provide a high dose of **nitrogen;** 20%-33% banana peel powder (BPP) which amongst other essential nutrients provides the **hydrogen** element; 3%-10% eggshell biochar (ESB) which provide amongst others the **carbon** nutrient;3%- 33% eggshell powder (ESP) which provides the **calcium** nutrient;

### Why Mosambi Peel powder (MMP)?

Mosambi peel powder contains: **nitrogen,** phosphorous, Potassium, calcium, magnesium, iron, selenium, manganese, zinc + boron+ chlorine+ molybdenum + copper (N+ P+ K+ Ca+ Mg+ Fe+ S+ Mn+ Zn+ B+ Ci+ Mo+ Cu)

The reason why this specific MMP ratio 1%-33% was chosen is because by varying the MPP you can manipulate acidity of every kind of agricultural soil immediately. As seen in de analysis of mosambi peel powder, we come to know that it contains a high dose of citric acid and nitrogen. With this acid we can modify the formula to serve soils of clay; sand; loam; sludge and every combination of mentioned soils to become pH neutral. Citric acid also acts as a chelating agent, to bind metals and excess minerals so they can be neutralized from the soil.

MPP is also acting as *acidifying agent* it: 1) It releases hydrogen ions (H⁺) when it dissolves in water. These hydrogen ions can then interact with hydroxide ions (OH⁻)in the soil, effectively neutralizing and reducing the soil pH level. 2)Lowering soil pH, by increasing the concentrations of hydrogen ions, citric acid can contribute to the acidification of the soil, making it more acidic. This can be beneficial in situations where pH level is too alkaline (high pH) and acidification is desired for certain plants that prefer acidic conditions.

MPP can act as *chelating agent*: a) It is a nutrient availability element by forming complexes with metal ions in soil such as iron, manganese, and zinc. These metal ions, when chelated by citric acid, are in a form that is more soluble and therefore, more available for plant uptake. b) It prevents nutrient deficiency, by improving the availability of essential nutrients. Citric acid indirectly supports plant growth and helps prevent nutrient deficiencies. This can be particularly relevant in soils where certain nutrients may become less available at higher pH levels.

It is important to note that while citric acid can influence soil pH, its effects may be temporary, and the long-term management of soil pH often involves more sustainable practices such as the use of organic matter. Additionally, the application of citric acid should be done with care, considering the specific needs of the plants and the existing soil conditions. Appropriate organic fertilizer and other soil amendments are recommended. That is why we add to our formula eggshell biochar (ESB); eggshell powder (ESP) banana peel powder (BPP).

MPP also provides *antioxidant* polyphenols and flavonoids and vitamin C to plants. They help neutralize harmful molecules called free radicals protecting the plant's cells from oxidative stress. It supports overall plant health and helps defend against environmental factors like UV radiation and pollution.

MPP contains an amount of phosphorous to help stimulate the *DNA synthesis* of the plant. Phosphorous ensures the accurate transmission of genetic information from one generation of cells to the next. It plays a vital role in the growth and development of plants, as well as their ability to adapt to changing environmental conditions. It supports roots development, flowering and energy transfer. Because mosambi peel powder is high in essential oils (limonene and linalool) it acts like a *natural pesticide* to deter certain pests. Limonene is effective against mosquitoes and ants while linalool is known to deter mosquitoes, fleas, and ticks. These natural pesticides have the advantage to environmentally friendly alternatives for repelling this ranges of insects.

Although MPP contributes to plant growth, supporting with antioxidants and as repelling pesticides (N), the ratio 1%-33% MPP in this formula is also needed to balance the pH level and acting as chelating agent.

### Why Banana Peel Powder (BPP)?

Banana peel powder contains the nutrients: **hydrogen** (high dose), potassium (high dose), nitrogen, phosphorous + calcium + magnesium + iron + selenium + manganese+ zinc+ boron+ chlorine+ molybdenum+ copper (K+ N+ P+ Ca+ Mg+ Fe+ S+ Mn+ Zn+ B+ Ci+ Mo+ Cu) We add (20%-33%) banana peel powder to our formula. Banana peel powder can be a beneficial and natural fertilizer for plants, offering several advantages in promoting soil health and plant growth. As the analysis of banana peel powder earlier shows us it contains various elements namely: potassium (K); phosphorous (P); calcium (C); magnesium (Mg); soluble and insoluble fiber; phenolics and flavonoids. For fertilizing *potassium* is a vital nutrient for plant growth, enzyme activation and water take up. It contributes to overall plant health and fruit development. BPP contains also a high amount of *phosphorous (P)* which support flowering, root development and energy transfer in plants. Also, a certain amount of *calcium (Ca)* is present in BPP which contributes to cell wall structure and overall plant strength. Furthermore, BPP contributes an essential element *magnesium* (Mg)which helps with chlorophyll formation and photosynthesis which is responsible for the green color of leaves. BPP contains *soluble and insoluble fiber*, which can benefit soil structure, water retention, and microbial activity. The organic matter in banana peel powder can improve the water retention capacity of soils, helping plants access water more effectively. This is particularly useful in sandy soils that have poor water retention (hydration benefits). Also, the organic matter in banana peel powder enhances soil structure by improving water retention, aeration, and drainage. It also promotes the development of beneficial soil microorganisms, known as microbial habitat. Banana peel powder provides a habitat for beneficial soil microorganisms. These microorganisms contribute to nutrient cycling, organic matter decomposition, and overall soil health. BPP contains compounds like *phenolics*, a six membered carbon ring with an attached hydroxyl group which contributes to the characteristics flavor, colors and antioxidants. BPP contains also *flavonoids.* Flavonoids are high in anti-oxidants which have positive effects on plant health, they protect them from oxidative damage. Flavonoids are also responsible for the various colors of fruits, vegetables, flowers and leaves. Banana peel powder is known for slow release of nutrients because it decomposes slowly, providing a gradual release of nutrients to the soil. This slow-release feature helps sustain plant growth over an extended period, reducing the risk of nutrient leaching. Banana peels have a buffering capacity, meaning they can help stabilize soil pH level. This can be particularly useful in slightly acidic soils, as the decomposition of banana peel powder can contribute to a more neutral pH level. Also, banana peels contain compounds like polyphenols and tannins that have natural pest-repellent properties. While not a replacement for dedicated pest control methods, the use of banana peel powder in the soil may contribute to deterring certain pests. Utilizing banana peels as a fertilizer represents a sustainable practice by recycling organic waste. This reduces the environmental impact of waste disposal and contributes to more circular and eco-friendly approach to agriculture (sustainable waste utilization). Banana peels are typically readily available and are often discarded as waste.

While banana peel powder offers these advantages, it's important to note that it should be used in moderation, and its nutrient content may not meet all the specific needs of certain plants. That is why we incorporate banana peel powder into a well-balanced ratio in our formula.

### Why Eggshell Powder (ESP)?

Eggshell powder contains the micro nutrients: **calcium,** magnesium, phosphorous, silicon, strontium, boron and zinc (Ca+ Mg+ P+ Si+ Sr+ B+ Zn). Although eggshell biochar contributes calcium carbonate to the soil our invented formula consists of eggshell powder (3%-33%), because calcium carbonate is an important element for strong cell walls, various cellular processes and thus overall plant health. ESP contains more essential nutrients beside the predominant calcium (Ca). Magnesium is also found in eggshells. Magnesium is important for chlorophyll synthesis in plants and plays a role in various enzymatic reactions. Also Phosphorous is found in eggshells. Phosphorous is crucial for energy transfer, cell division, and the development of plant roots. ESP also contain small amount of protein and traces of other minerals such as zinc, copper, iron, manganese all necessary micro ingredients for plant health.

It is important to note that while eggshell powder can provide supplemental calcium and other nutrients, not all nutrients in eggshells may be readily absorbed by plants. It needs acid to break it down and a carrier to infuse it into the soil and plant growth. That is why in our formula we combine ESP with MPP and ESB. Because as we explained earlier that MPP helps with synthesis of nutrients and one of the advantages of ESB is to act as carrier for nutrients.

Another valuable amendment is the fact that incorporating eggshells into our formula allows for recycling of waste materials that would otherwise end up in landfills. This helps combat the climate crisis. Not only reduces waste but also transforms it into a resource for improving soil health. Furthermore, the affordability is a valuable advantage. Eggshells are often readily available at low cast or for free, making eggshell biochar a cost-effective soil amendment.

### Why Eggshell Biochar (ESB)?

Because ESB is a relative new component to use, the benefit it brings will be discussed in detail. Each of these benefits will then be discussed in more detail because they all provide the basis for so using ESB in the new invention.

ESB contains **carbon,** calcium, + magnesium+ strontium phosphorous + iron (Ca+ C+ Sr+ Mg+ P+ Fe).

The ratio for ESB is set on 3%-10% because not every soil is equally polluted. ESB is a carbon-rich material. As we noticed earlier in the analyses of ESB is that it serves as a *valuable amendment* to support *nutrient cycling*, contributes to *pH regulation*, enhance soil structure and water retention, and is regarded as an *innovative catalyst* for organic *pollutant degradation* (*carbon sequestration*).

ESB as valuable amendment: **a)** Contributes to a good source of calcium because eggshells are primarily composed of calcium carbonate. When incorporated into the soil, eggshell biochar slowly releases calcium, contributing to the soil's calcium content. Calcium is an essential nutrient for plant growth and particularly important for cell wall formation, root development, and overall plant structure. **b)** ESB helps pH regulation when added to acidic soils. Eggshell biochar can help neutralize acidity and raise the pH, making the soil more neutral or slightly alkaline. This is beneficial for plants that prefer or tolerate neutral to alkaline soil conditions. **c)**ESB is a slow releaser of calcium. The decomposition of eggshells within the biochar matrix is a slow process. This slow release of calcium can provide a long-term supply of this essential nutrient to plants, promoting steady and sustained growth. **d)** ESB has valuable properties for soil/water retention and microbial habitat. Biochar is a form of charcoal produced through pyrolysis of eggshells. It has the property to enhance soil structure by improving water retention in sandy soils and promote drainage in clayey soils. The microbial habitat of biochar is that it provides a porous structure that serves as a microbial activity, leading to improved nutrient cycling and availability for plants. **e)** ESB stimulates nutrient cycling. Nutrient cycling refers to the process by which nutrients are taken up by plants, released into the soil through various processes, and then made available again for plant uptake. In the context of eggshell biochar, nutrient cycling involves the movement and transformation of essential nutrients, particularly calcium, within the soil-plant system.

**f)** ESB acts as an `innovative catalyst': It's crucial to recognize that the term "innovative catalyst" is used here in a metaphorical sense to highlight the positive impacts of eggshell biochar on soil properties and functions. While it may not function as a chemical catalyst, its effects on soil improvement can be transformative, contributing to sustainable and resilient agricultural practices.

The valuable amendments of ESB further explained to emphasize the importance of adding ESB to our unique invention.

**Ad a)** *Good source of calcium.* It is important to note that while eggshell biochar can provide calcium and offer these benefits, its effectiveness depends on factors such as the quantity applied, soil conditions, and the specific needs of the plants being cultivated. Calcium is an *essential nutrient* for plant growth, it plays a crucial role in cell wall formation, cell division and cell elongation. Adequate calcium availability is necessary for overall plant structure, root development, and proper functioning of various physiological processes. Calcium carbonate content in eggshell biochar acts as a *natural buffer.* It can help *regulate soil pH* by neutralizing excess acidity. This is particularly beneficial in acidic soils, where the addition of eggshell biochar can contribute to pH adjustment, making the soil more favorable for plant growth. Calcium carbonate is *alkaline*, and the addition of eggshell biochar can help raise the pH of acidic soils. This is important for crops that thrive in neutral to slightly alkaline conditions. Reduced soil acidity also supports the availability of other essential nutrients to plants.

Eggshell biochar *releases calcium gradual* slowly over time. This slow release aligns with the plants' needs, providing a sustained and continuous supply of calcium to support plant growth. This is in contrast to quick-release fertilizers, offering a more stable nutrient supply. The calcium from eggshell biochar can contribute to the formation of *stable soil aggregates.* This enhances soil structure, promoting good aeration, water drainage, and root penetration. Improved soil structure is vital for overall soil health and plant productivity. Eggshell biochar, often has a high cation exchange capacity (CEC). This property enhances the retention and availability of essential calcium in the soil, promoting nutrient efficiency and reducing nutrient leaching.

**Ad b)** ESB can support pH regulation as a buffering effect. Eggshell biochar can support pH regulations in soil through its composition and properties. Eggshells are primarily composed of calcium carbonate, which is a *natural buffer.* When incorporated into the soil, eggshell biochar gradually releases calcium ions and carbonate ions. The carbonate ions can react with acidic components in the soil, helping to neutralize acidity. This process acts as a buffer stabilizing the soil pH and preventing rapid fluctuations.pH adjustment of calcium carbonate is alkaline, and as it breaks down within the eggshell biochar, it releases alkaline components into the soil. This has the effect of raising the pH of acidic soils, making them more neutral or slightly alkaline. The gradual release of alkaline substances provides a sustained and long-term adjustment to soil pH level. Preventing acidification, in areas where soil acidification is a concern due to factors like acid rain or the use of acidic fertilizers, the incorporation of eggshell biochar can act as a preventative measure. The buffering capacity of calcium carbonate helps maintain the soil's pH within an acceptable range for plant growth.

Before applying eggshell biochar for pH regulation, it's advisable to conduct a soil test to understand the current pH of the soil and determine the appropriate quantity needed for the desired pH adjustment. It is important to note that while ESB can have a pH-regulating effect it impact may vary based on factors such as the initial pH of the soil, the quantity of eggshell biochar added, and the buffering capacity of the soil.

**Ad c)** A *slow release of calcium.* The slow release of calcium to the soil via eggshell biochar offers several advantages, contributing to improved soil health and enhanced plant growth. Here are some of the advantages: The slow release of calcium from eggshell biochar provides a sustained and continuous supply of this essential nutrient to plants. This is particularly beneficial because it aligns with the plants' growth and development phases, ensuring that calcium is available when needed. *Reduced risk of over fertilization.* Slow-release mechanisms help avoid the risk of over-fertilization. Rapid or excessive application of certain fertilizers can lead to nutrient imbalances, environmental pollution, and harm to plant roots. The gradual release of calcium from eggshell biochar allows for better control over nutrient availability without causing negative effects. Long term soil amendment eggshell biochar contributes to long-term soil improvement. As the biochar decomposes slowly, it continues to release calcium over an extended period. This long-term effect is valuable for sustainable agriculture, providing a lasting impact on soil fertility and plant nutrition. *Stable soil pH regulation*, the slow release of calcium helps in stabilizing soil pH over time. Calcium carbonate, present in eggshell biochar, acts as a pH buffer, neutralizing excess acidity. This gradual adjustment prevents sudden pH fluctuations, creating a more stable and favorable environment for plant growth. *Enhanced nutrient uptake*, Slow-release calcium supports better nutrient uptake by plant roots. The steady availability of calcium promotes efficient absorption by plant roots, ensuring that this essential nutrient is readily accessible for various physiological processes. *Improves plant resilience*, the sustained availability of calcium contributes to improved plant resilience. Adequate calcium is associated with stronger cell walls, increased disease resistance, and enhanced tolerance to environmental stressors. Plants with sufficient calcium are better equipped to withstand challenges and exhibit overall better health. *Reduced environmental impact*, Slow-release mechanisms can reduce the environmental impact associated with nutrient runoff. When nutrients are released gradually, plants can take up what they need, and there is less risk of excess nutrients leaching into water bodies, causing pollution.

Efficient use of resources, Slow-release calcium from eggshell biochar allows for efficient utilization of resources. This aligns with sustainable agriculture practices, emphasizing the importance of resource efficiency, reduced waste, and long-term soil health.

It is important to note that the effectiveness of slow-release calcium from eggshell biochar depends on factors such as soil type, climate, and the specific needs of the plants being grown. Proper application, based on soil testing and consideration of plant requirements, is essential to maximize the benefits of this slow-release nutrient source.

**Ad d)** Properties of ESB *soil*/*water retention and microbial habitat.* ESB can enhance soil structure and water retention through several mechanisms. The porous structure of biochar, improves aeration. Because biochar has a porous structure that creates open spaces in the soil it improves soil aeration by allowing better movement of air between soil particles. Adequate aeration is crucial for root respiration and the activity of soil microorganisms. *Increased surface area for Water retention.* The porous nature of biochar increases its surface area therefore it provides more sites for water molecules to adhere to, helping to retain water in the soil. In sandy soils with poor water retention, the addition of eggshell biochar can enhance the soil's ability to hold onto water. *Enhanced cation exchange capacity (CEC),* nutrient retention, Biochar, including eggshell biochar, has a high cation exchange capacity (CEC). CEC is the soil's ability to retain and exchange positively charged ions (cations), including essential nutrients like calcium, magnesium, and potassium. The higher CEC helps retain these nutrients in the soil, making them available to plants and reducing the risk of nutrient leaching. *Microbial habitat,* support for microorganisms, The porous structure of biochar serves as a habitat for beneficial soil microorganisms. These microorganisms contribute to the breakdown of organic matter and the formation of soil aggregates. Improved soil aggregation enhances water retention and drainage by creating channels for water movement. *Reduced soil compaction, prevention of compaction,* the addition of eggshell biochar can contribute to the prevention of soil compaction. Compacted soils have reduced pore spaces, limiting water infiltration and root penetration. The improved soil structure from biochar helps maintain a more open and loose soil, allowing water to penetrate and roots to grow more effectively. *Organic matter incorporation,* integration with organic material, when eggshell biochar is added to the soil, it can integrate with existing organic matter. This integration improves the overall organic content of the soil, contributing to better soil structure. Organic matter plays a key role in enhancing soil structure by promoting the formation of stable aggregates. It is important to note that the effectiveness of eggshell biochar in enhancing soil structure and water retention can vary depending on factors such as soil type, climate, and the specific conditions of the site. Additionally, the application of eggshell biochar should be part of a comprehensive soil management plan that considers other factors such as nutrient needs, pH requirements, and crop-specific considerations.

**Ad e)** ESB lends itself to be a perfect *nutrient cycling medium.* When infused with nutrients eggshell biochar can become a carrier for beneficial elements like nitrogen, phosphorus, potassium. The goal in our formula is to customize biochar with mosambi peel powder high in nitrogen and citric acid, banana peel high in potassium, phosphorous, calcium magnesium and some natural compounds. Also, eggshell powder high in calcium carbonate will be infused. Eggshell powder contains also magnesium, phosphorous, proteins and some other traces of minerals like copper, iron, manganese and zinc.

*Plant uptake, calcium uptake by plants,* Plants take up calcium through their roots. The released calcium from eggshell biochar becomes available in the soil solution, and plant roots absorb it for various physiological processes, including cell wall formation and cellular signaling.

Soil microorganisms play a role in breaking down the organic components of eggshell biochar. As they decompose organic matter, they release nutrients, including calcium, into the soil, contributing to the nutrient pool available to plants.

Eggshell biochar often has a high cation exchange capacity (CEC). This property allows biochar to retain and exchange ions, including calcium, with the soil. The CEC contributes to nutrient cycling by holding onto essential nutrients and making them available to plants.

The biochar component of eggshell biochar continues to decompose over time, contributing to the mineralization of organic matter. This process releases nutrients back into the soil, supporting the nutrient cycling process.

The calcium carbonate content in eggshell biochar provides pH buffering capacity. As it interacts with soil acids, it helps maintain a stable pH, creating favorable conditions for nutrient cycling and plant growth.

The use of eggshells in biochar represents a form of nutrient recycling. By repurposing waste materials, nutrient cycling becomes more sustainable, reducing the need for synthetic fertilizers and minimizing nutrient loss.

**Ad f)** ESB as innovative catalyst. Its effects on soil improvement can be transformative, contributing to sustainable and resilient agricultural practices

Eggshell biochar, with its porous structure, can enhance soil aggregation. This creates a more stable soil structure with improved porosity, water infiltration, and aeration. The enhanced soil structure can be likened to a catalyst for promoting better physical conditions in the soil.

The calcium carbonate content from eggshells in biochar can act as a pH buffer, helping to regulate soil pH levels. In acidic soils, the alkaline nature of calcium carbonate can neutralize acidity, contributing to improved conditions for plant growth. This regulatory role is akin to a catalyst in facilitating optimal pH conditions. *Nutrient retention and availability,* cation exchange capacity (CEC) Eggshell biochar typically exhibits a high cation exchange capacity (CEC). This property allows the biochar to retain and exchange essential nutrients, making them more available to plants. The nutrient retention and exchange functions can be considered catalyst-like in facilitating nutrient cycling. *Water retention an efficiency*: increased water holding capacity. The porous structure of biochar, including eggshell biochar, enhances water retention in the soil. This can be likened to a catalyst for water management, improving the efficiency of water use by plants and minimizing water runoff.

The porous nature of eggshell biochar provides a habitat for beneficial soil microorganisms. This supports microbial activity, including nutrient cycling and organic matter decomposition. The presence of biochar can act as a catalyst for enhancing soil microbial communities.

Eggshell biochar contributes to carbon sequestration in the soil. The stable carbon content from the biochar acts as a long-term storage mechanism, reducing carbon dioxide emission and sequestering carbon in relatively inert form.

Due to all these benefits, biochar is part of the invented Conclusion:
Now that the 4 components of the unique invention are mentioned with all the properties and advantages, they bring to the formula it is clear that we have a solid organic fertilizing formula consisting N, H, C, other macronutrients P K, all micronutrients and several necessary minerals.

The key is by simultaneously adding eggshell biochar, soils will be cleared from heavy metals such as cadmium (Cd)and lead (Pb). This invention is one of a kind because the amount of eggshell powder, banana peel powder, biochar eggshell in relation with the mosambi peel powder can be varied considerably according to the final concentration desired to serve different kind of soils (Clay, Sand, Silt or Loam soil or combination). Mosambi powder has a higher nitrogen and calcium level than the rest so if more nitrogen is desired in a specific formulation, then additional mosambi powder may be added to the fertilizer mixture. If there is more need for hydrogen more banana peel powder will be added. If soils need more calcium more eggshell powder will be added and if soils need to be made more porous to in order that plants can absorbs nutrients easier eggshell biochar can be added. The reverse of all is also possible, less mosambi peel if soils are to acidic, less banana powder if there is less need for hydrogen, less eggshell powder if soils have too much calcium, less biochar is grounds are too porous.

A preferred fertilizer mixture comprising eggshell powder, banana peel powder, mosambi peel powder and eggshell biochar has a formulation of 30% eggshell powder +35% of banana peel powder+ 25% of mosambi peel powder + 10% eggshell biochar.

This formula will sure make the agricultural land suitable for growing healthy, organic crops for human consumption, crops free from harmful substances like heavy metals and at the same time combating the climate crisis (CO2 emission).

**Although each ingredient above is individually known to have use as plant food, combinations of the above have never been disclosed. Nor have such combinations been obvious to those skilled in the art.**

### PRODUCTION OF THE EGGXELLENT FERTILIZER AND SOIL ENHANCER

Our product goes through a number of stages look at figure 1.
I. Mosambi peels and banana peels as well as the eggshell are collected separately from household wastage.
II. The mosambi peels as well as the banana peels are separately thoroughly cleaned with Luke warm water (36-40 degrees Celsius) to remove bacterial and viral contact.
III. After they are exposed to the sun for 72 hours, 14 days with 5 peak sunshine hours.
IV. Then the eggshells are also thoroughly cleaned with Luke warm water (36-40 degrees Celsius) to remove bacterial and viral contact. After that they are treated for 5 minutes with boiling water. They are exposed to the sun for 72 hours, 14 days with 5 peak sunshine hours.
V. When all products are dry, they are crushed to small pieces in order to make powder using a grinder.
VI. Thereafter they are checked separately on nutrients, packed in airtight bags.
VII. Then they are stored against protocol in a dry place, ready for use.
VIII. Eggshell biochar comes in airtight bags from a producer. There is has gone through a process of pyrolysis. This is a process which involve heating of eggshell where in absence of oxygen they are heated to 400-1000 degrees Celsius. The eggshells become carbonized, they are crushed and sealed in airtight bags against protocol, ready for use.
IX. When there is a demand for a particular mix, the recipe is examined and produced.
X. The fabric gets a notice to compose the product against protocol.
XI. The nutrients are checked. The product is mixed according to customer's wishes
XII. Stored in airtight bags, ready to meet the client.

### EXPECTED BENEFITS OF THE INVENTED FORMULA

This innovative formulation (with dominant use of nutrients N,H,C and Ca), carefully crafted with a blend of unique organic ingredients, is poised to revolutionize plant nutrition and soil health. We recognize the expected benefits of this new fertilizer as follow:
- Soil pH regulation; Bringing soil to a pH neutral level
- Sequesters carbon effectively (carbon sequestration);
- Boost porous structure of soil;
- Overall aeration of soil;
- Sublime carrier for added nutrients to enhance the soil;
- Promotes plant growth;
- Innovative catalyst for organic pollutant degradation;
- Building strong cell walls for plants;
- Natural source of calcium;
- Slow-release fertilizer;
- Chelating agent;
- Anti-oxidants provider;
- Support flowering;
- Support root development;
- Support energy movement in plants;
- Natural pesticide;
- Rid the soil of cadmium and lead, some studies say even cyanide can be neutralized within a few weeks;
- Supports environmental sustainability by using waste to make plant food;
- Stimulating agricultural ecosystem and a circular economy;
- Extremely cost effective because waste is re-used.

The above ingredients serve to make an improved commercial organic plant food formulation because each individual ingredient contains higher concentrations of plant nutrients than either of the individual components. Combinations of the above have not been disclosed yet in the world of organic fertilizers. This is a unique formula to serve various soils in order to be PH neutral.

### CONCLUSION

In conclusion, the novel fertilizer formulation combining eggshell biochar, eggshell powder, banana peel powder, and mosambi peel powder presents a myriad of advantages that collectively contribute to a sustainable and effective solution for modern agriculture. This innovative blend harnesses the unique properties of each component, synergizing their benefits for comprehensive soil enrichment and plant growth. In essence, the unique combination of eggshell biochar, eggshell powder, banana peel powder, and mosambi peel powder in this fertilizer offers a holistic and environmentally conscious approach to soil enrichment. By addressing multiple facets of soil health and plant nutrition, this novel formulation, not yet known to those skilled in art stands at the forefront of sustainable agricultural innovations, paving the way for a more resilient, cost-efficient, economy effective and eco-friendly future in industrial agriculture and gardening.

### Literature

*1.* Pubmed advanced: Application of eggshell waste for the immobilization of cadmium an lead in a contaminated soil. Authors:Yong Sik OK et al. Environ Geochem health 2011 Jan.
*2.*Immobilization of Pb, Cd and Zn in a contaminated soil using eggshell and banana stem amendments: metal leachability and a sequential extraction study. Authors: Ashrafi M. et al Environ Sci Pollut Res Int.2015.PMID:25060308,2015 Jan*.*
*3.*Study on eggshell and fruit peels as fertilizer; Mayur Dattatray Khairnar & Sagar Sreekumar Nair Department of Mechanical Engineering B.R.H.C.E.T. University of Mumbai, India*.*

## Claims

1. This invention relates to a composition of plant food and at the same time soil enhancer for the purpose of transforming industrial agriculture into neutral pH level land in order to grow healthy natural nutritious food. More particularly, this invention is concerned with a novel composition for fertilizing industrial agriculture by combining eggshell powder, mosambi peel powder, banana peel powder and eggshell biochar in certain appropriate proportions. This new composition being especially suitable for the treatment of all kinds of soils for instance: clayey, sandy, slushy, loamy and combinations of these soils which need to become pH neutral, purified from heavy metals and simultaneously fertilized with the right plant nutrition needed at that given moment in a natural organic way.
An organic soil amendment composition comprising a synergistic blend of eggshell biochar, mosambi peel, banana peel powder, and eggshell powder, providing a novel and effective solution for enhancing soil fertility, structure, and microbial activity and neutralizing pH level of soil in a sustainable manner.

2. The composition of Claim 1, wherein the eggshell biochar is derived from a carbonization process of eggshells is called pyrolysis. This process involves heating (400 to 1000 degrees Celsius) of eggshells in the absence of oxygen. Because of this process biochar is exhibiting a porous structure that enhances water retention, nutrient availability, and soil aeration. Biochar neutralizes the soil from heavy metals like cadmium and lead and acts as a carbon sequestration known for storing carbon in the soil for extended period. Eggshell biochar acts as perfect carrier for nutrients and as an innovative catalyst for organic pollutants.

3. The composition of Claim 1, wherein the mosambi peel is sourced from household wastage. To remove bacterial and viral contact from mosambi peels, they are washed in Luke warm water. After that kept in sunlight around 72 hours, approximately 14 days of 5 peak sunshine hours, then crushed, checked on nutrients and stored in airtight bags. Mosambi peel powder is very rich in nitrogen, citric acid and phosphorous. The citric acid acts like a chelating agent. By changing the ratio of citric acid in our composition the pH value of soils can be balanced. Also, antioxidants like polyphenols and flavonoids are present. Furthermore, organic fibers, a high dose of vitamin C and some essential oils such as limonene and linalool are present in mosambi peel powder. All of these nutrients, minerals, antioxidants and essential oils contribute natural antimicrobial properties and organic matter to the composition, supporting beneficial microbial activity in the soil.

4. The composition of Claim 1, wherein the banana peel powder is obtained from household wastage of banana peels, it contains a high dose of hydrogen which is important for the development of the plant and the formation of organic carbon, as well as providing nutrients for the plant to grow. Banana peel powder also contains a high dose potassium which supports plant growth and plant health. Furthermore, it has phosphorous which supports flowering, root development and energy transfer. Then banana peel powder contains calcium for wall structure and overall plant health and magnesium which helps with chlorophyll formation and photosynthesis and some other essential nutrients. Banana peel powder is specifically added to the composition to promote plant growth and to promote formation of organic carbon. To remove bacterial and viral contact from banana peels they are washed in Luke warm water. After that kept in sunlight around 72 hours, approximately 14 days of 5 peak sunshine hours, then crushed, checked on nutrients and stored in airtight bags.

5. The composition of Claim 1, wherein the eggshell powder is produced, contains a high dose of calcium. In case eggshells are collected from household wastage. To remove bacterial and viral contact eggshells are washed in Luke warm water. After that eggshells are treated for 5 minutes with boiling water. Then they are kept in sunlight around 72 hours approximately 14 days of 5 peak hours of sunshine. Then they are crushed checked on nutrients and stored in airtight bags. Eggshells, provide a rich source of calcium and other minerals contributing to the overall nutrient content of the composition. Calcium is added to the formula, also to act as a pH buffer by neutralizing acidic soils, as a slow-release fertilizer and as a soil structure improver by promoting better aeration and water retention.

6. Claim 1-5 regards to produce a natural organic plant food. Proven by scientific studies (1) we have come to known that biochemical process (photosynthesis) and biological process (organic carbon production) in the soil are disturbed if the pH value of the soil is not healthy. To this end, studies have been done on retention and determination values of **nitrogen (N), hydrogen (H)** and **carbon (C). Nitrogen** has a prominent role in the process of photosynthesis. Photosynthesis is the biochemical process by which green plants use sunlight as a source of energy to convert carbon dioxide and water. Nitrogen also plays an important role in enhancing the growth process and improving nutritional quality. **Hydrogen** is important for the development of the plant and the formation of organic carbon, as well as providing nutrients for the plant to grow. It also stimulates the structure, biological and physical health of the soil. The released organic carbon releases nutrients to help the plant grow healthily. This is why **carbon** is one of the main building blocks of a plant. All this happens optimally only when the soil has a healthy pH value. Therefore, to find the right *unique organic nutrient mix, nitrogen, carbon and hydrogen* content must be taken into account. These biochemical and metabolic processes are highly dependent on the *calcium* content of the soil. The idea has arisen to synthesize a *nutrient mix containing nitrogen, carbon, hydrogen and calcium* to optimally feed each type of soil. N is found in mosambi peel powder, H is found in banana peel powder, C is found in eggshell biochar and Ca is found in calcium powder. The mentioned ingredients serve to make an improved low-cost commercial organic plant food formulation because each individual ingredient contains higher concentrations of plant nutrients than either of the individual components. Combinations of the above have not been disclosed yet in the world of organic fertilizers. This is a unique formula to serve various soils.

7. Claim 1-6 regards as a sustainable approach to create an organic fertilizer that leverages the benefits of eggshell biochar, eggshell powder, banana peel powder, and mosambi peel powder in order to provide healthy soil. It provides an organic soil amendment as composition of claims 1-6 is executed by proportioning the determined amounts of eggshell biochar, eggshell powder, banana peel powder and mosambi peel powder for the desired nutrient balance and soil enrichment. In case the components of claim 1-6 are recommended but not limited to *the mixture of the invention.*
The invented composition of the formula (figure 1) contains:
**1.Mosambi powder (1%-33%):** Contains high dose of **nitrogen** + macronutrients phosphorous and potassium (P+K) and micronutrients: calcium, magnesium, iron, manganese, zinc, boron, chlorine, molybdenum and copper (Ca+ Mg+ Fe+ S+ Mn+ Zn+ B+ Ci+ Mo+ Cu)
**2.Banana peel powder (20%-33%):** Contains high dose of **hydrogen** + macronutrients: (N+P+K) and micronutrients: calcium, magnesium, iron, selenium. Manganese, zinc, boron, chloride, molybdenum and copper (Ca+ Mg+ Fe+ S+ Mn+ Zn+ B+ Ci+ Mo+ Cu.
**3.Eggshell biochar (3%-10%):** Contains high dose **carbon** + micronutrients: calcium, strontium, magnesium, phosphorous and iron (Ca+ C+ Sr+ Mg+ P+ Fe).
**4.Eggshell powder (3%-33%%):** Contains high dose of **calcium** + micronutrients: magnesium, phosphorous, silicone, strontium, boron and zinc (Ca+ Mg+ P+ Si+ Sr+ B+ Zn).
All nutrients are blend together - as needed for a certain type of soil- to achieve a homogenous mixture. The mixture is tested for different values after that sealed in airtight bags and stored in a cool, dry place to maintain its integrity and prevent clumping.

8. The organic soil amendment composition of Claims 1-7, provide the ultimate solution for *honest organic fertilizer and soil enhancer.* In the realm of organic agriculture, the incorporation of this unique blend of organic materials such as eggshell biochar, eggshell powder, banana peel powder, and mosambi peel powder represents a groundbreaking and innovative approach. This holistic organic fertilizer not only stands out for its ecological benefits but also emerges as the ultimate solution for sustainable and regenerative farming practices. It is easy to use by just throwing it on the soil where needed. It is a comprehensive soil amendment that enhances soil fertility, structure, and microbial diversity. The inclusion of eggshell biochar, produced through a controlled pyrolysis process, promotes carbon sequestration in the soil, mitigating climate change effects. Eggshell powder contributes valuable calcium, essential for plant growth, and acts as a pH regulator, enhancing soil structure. The combination of banana peel powder and mosambi peel powder introduces a diverse array of nutrients, including potassium, phosphorus, and other micro-nutrients, addressing a broad spectrum of plant nutritional needs. This diversity minimizes the risk of nutrient imbalances commonly associated with single-source fertilizers. Mosambi peel and banana peel powders are rich sources of organic matter, fostering microbial activity in the soil and enhancing nutrient cycling. Increased microbial diversity supports the development of a healthy soil microbiome, crucial for nutrient uptake by plants. Integration of eggshells, banana peels, and mosambi peels into the organic fertilizer repurposes agricultural and household waste, aligning with the principles of a *circular economy.* By reducing waste, this approach exemplifies a *sustainable and environmentally friendly agricultural* practice. The porous structure of eggshell biochar enhances water retention in the soil, reducing the need for irrigation and promoting drought resistance in plants. Simultaneously, it improves soil aeration, fostering optimal root growth and nutrient absorption. The synergistic effects of these organic components lead to improved soil fertility, resulting in higher crop yields. Plants grown in soil enriched with this organic fertilizer exhibit improved nutrient content, contributing to enhanced food quality. The customizable proportions of eggshell biochar, eggshell powder, banana peel powder, and mosambi peel powder make this organic fertilizer adaptable to a wide range of crops and agricultural practices. Embracing *regenerative agriculture principles,* this organic fertilizer not only sustains but actively improves soil health over time, promoting *long-term environmental and agricultural sustainability.* The combination of eggshell biochar, eggshell powder, banana peel powder, and mosambi peel powder as an organic fertilizer represents a paradigm shift in organic agriculture. This innovative approach, not yet known in this composition by those skilled in art, embraces *ecological, economic,* and *social sustainability,* making it the ultimate, simple solution for farmers committed to cultivating in harmony with nature.

9. In the pursuit of sustainable agriculture and gardening practices, our innovative organic fertilizer and soil amendment stand out as a revolutionary solution that caters to the needs of industrial agriculture and individual gardeners and other end-users. An agricultural product labeled as an enriched organic soil amendment, comprising the composition of Claims 1-6, labeled as a versatile and environmentally friendly product, it addresses the pressing issues of soil quality improvement while actively contributing to *reducing CO2 emissions.* Our innovative organic fertilizer and soil amendment offer a holistic solution for improving soil quality in a manner that is both convenient for industrial agriculture and accessible to individual gardeners and other end-users. Embracing sustainable and environmentally friendly principles, this product not only enhances agricultural productivity but also plays a crucial role in *mitigating the impact of CO2 emissions, contributing to a healthier and more sustainable planet.*
**Although each ingredient above is individually known to have use as plant food, combinations of the above have never been disclosed. Nor have such combinations been obvious to those skilled in the art look at figure 1.**
